# EUROPÄISCHE PATENTSCHRIFT

(11) **EP 0 875 459 B1**
(45) Veröffentlichungstag und Bekanntmachung des Hinweises auf die Patenterteilung: **13.02.2002**
(21) Anmeldenummer: 98105944.7
(22) Anmeldetag: 01.04.1998
(51) Int. Cl.: B65B 43/52, B65G 17/48

(54) **Tubenfüllmaschine**
Tube-filling machine
Machine de remplissage de tubes

(30) Priorität: 30.04.1997 DE 19718207
(43) Veröffentlichungstag der Anmeldung: 04.11.1998
(73) Patentinhaber: IWK Verpackungstechnik GmbH, 76297 Stutensee-Blankenloch (DE)
(72) Erfinder: Christ, Richard, 56281 Emmelshausen (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 1 577 903
- DE-A- 3 525 448
- DE-C- 550 528
- GB-A- 1 176 279

## Beschreibung

Die Erfindung betrifft eine Tubenfüllmaschine mit einer in einer Ebene umlaufenden Transportvorrichtung mit einer Vielzahl von Halteelementen, in die jeweils zumindest eine Tube einsetzbar und durch einzelne Arbeitsstationen transportierbar ist.

Tubenfüllmaschinen des genannten Aufbaus dienen dazu, die der Maschine zugeführten leeren Tuben kontinuierlich durch die zum Befüllen und Verschließen der Tube notwendigen Arbeitsstationen zu führen und die gefüllten und verschlossenen Tuben anschließend an eine Vorrichtung zur Weiterverarbeitung, beispielsweise zur Verpackung, abzugeben. Zum Transport der Tuben innerhalb der Tubenfüllmaschine wird eine umlaufende Transportvorrichtung in Form eines Rundläufers, der einen Drehteller aufweist, oder eines Ovalläufers verwendet, der einen über zumindest zwei Umlenkrollen geführten Riemen, beispielsweise einen Zahnriemen oder eine Kette umfaßt. Da die Füll- und Verschlußvorgänge nur an senkrecht stehenden Tuben ausgeführt werden können, sind die bekannten Transportvorrichtungen in der überwiegenden Zahl horizontal umlaufend ausgebildet, wobei die Tuben während des gesamten Transports durch die Tubenfüllmaschine in senkrechter Ausrichtung gehalten sind. Dies führt jedoch an der Zuführstation, an der die leeren Tuben in die Transportvorrichtung eingesetzt werden, zu erheblichen Nachteilen, da die leeren Tuben aus einem Magazin entnommen werden, in dem sie in der Regel horizontal liegend aufgenommen sind. In der Zuführstation ist deshalb für die Tuben eine Aufrichtvorrichtung vorgesehen, mittels der jede Tube aus der horizontalen Ausrichtung in die vertikale Ausrichtung aufgestellt werden muß, bevor sie in die Transportvorrichtung eingesetzt werden kann.

In der am Ende der umlaufenden Transportbewegung angeordneten Entnahmestation, an der die gefüllten Tuben aus der Tubenfüllmaschine entnommen und in liegender, horizontaler Ausrichtung weitergeleitet werden, ist es wiederum notwendig, die Tuben aus der vertikalen Ausrichtung in die horizontale Ausrichtung zu bringen. Diese doppelte Änderung der Tubenausrichtung ist insbesondere bei mehrbahnigen Tubenfüllmaschinen, bei denen mehrere Tuben gleichzeitig zugeführt werden müssen, gerätetechnisch aufwendig und somit teuer. Darüber hinaus stellt sie eine potentielle Störungsquelle beim Betrieb der Tubenfüllmaschine dar. Unter anderem hängt das damit zusammen, daß in der Regel Schwenkprismen eingesetzt werden, die die Tuben mit Unterdruck halten und empfindlich auf unrunde Tuben reagieren. Bei der Tubenausgabe erfolgt die Umlenkung meist im freien Fall mit anschließendem Abgleiten auf einem Überleitblech. Durch Verschmutzung bewirkte Reibungsschwankungen können die Störanfälligkeit erhöhen.

Aus der DE-A-1 577 903 und der GB-A-1 176 279 sind Vorrichtungen zum Transport von Behältern bekannt. Die Behälter werden mit horizontal ausgerichteter Längsachse in Halteelemente der Transportvorrichtung eingespannt. Anschließend wird die Längsachse zum Befüllen und Verschliessen in eine vertikale Lage verschwenkt. Dafür sind die Halteelemente über Gelenke an einem Transportriemen angelenkt und wirken mit einer Führungsschiene zusammen, die die gelenkig gelagerten Halteelemente im Bereich der Befüllstation und der Verschlußstation um 90° verschwenken. Zum Entladen der Behälter werden die Halteelemente durch die Führungsschiene wieder um 90° verschwenkt, so daß sie wieder in der Ausgangslage aus den Halteelmenten entnommen werden können.

Der Erfindung liegt die Aufgabe zugrunde, eine Tubenfüllmaschine zu schaffen, mit der die vorgenannten Nachteile vermieden sind und die Tuben in einfacher Weise in ihrer Ausrichtung angepaßt werden können.

Diese Aufgabe wird erfindungsgemäß bei einer o.g. Tubenfüllmaschine dadurch gelöst, daß die Ebene der Transportvorrichtung unter einem Winkel α gegenüber der Horizontalen geneigt ist und daß die Tube derart in dem Halteelement gehalten ist, daß ihre Längsachse unter einem Winkel β gegenüber der Ebene der Transportvorrichtung geneigt ist.

Bei der erfindungsgemäßen Tubenfüllmaschine wird die Änderung der Tubenausrichtung bezogen auf die Horizontale allein dadurch erreicht, daß die Ebene der Transportvorrichtung unter dem Winkel α gegenüber der Horizontalen geneigt ist, wobei gilt: 0° < α < 90°. Vorzugsweise liegt der Winkel α im Bereich von 20° bis 70°. Auch hierbei sollte vorgesehen sein, daß die Tube in der Füll- und Verschlußstation vertikal ausgerichtet ist. Eine vertikale Ausrichtung der Tube in den Füll- und Verschlußstationen wird dann erreicht, wenn das Halteelement unter dem Winkel β gegenüber der Ebene der Transportvorrichtung geneigt angeordnet ist, wobei α + β = 90° ergeben. Auch der Winkel β sollte somit im Bereich von 20° bis 70° liegen. Im gegenüberliegenden Abschnitt der umlaufenden Transportvorrichtung, die vorzugsweise als umlaufender Zahnriemen oder auch als entsprechende Kette ausgebildet sein kann, ist dann die Längsachse der Tube um den Winkel α - β + 180° gegenüber der Horizontalen bzw. um den Winkel α - β + 90° gegenüber der Vertikalen geneigt.

Wenn die Winkel α und β jeweils zu 45° gewählt werden, wird erreicht, daß die Tube auf der einen Seite des umlaufenden Zahnriemens in senkrechter Ausrichtung und auf der anderen Seite des Zahnriemens in dazu um 90° geschwenkter, d. h. horizontaler Lage gehalten ist. Somit können die leeren Tuben in horizontaler Ausrichtung in die Halteelemente der Transportvorrichtung eingeführt werden, wobei sie während des Umlaufs durch die Tubenfüllmaschine aufgrund der genannten Neigungswinkel in eine vertikale Ausrichtung gebracht werden, in der sie befüllt und verschlossen werden können, woraufhin sie beim weiteren Umlauf wieder in ihre horizontale Ausrichtung zurückkehren, so daß sie in einfacher Weise entnommen und abgeleitet werden können.

Wenn der Winkel α etwas kleiner als 45° und der Winkel β etwas größer als 45° gewählt wird und wenn α + β 90° ist, befinden sich die Tuben auf der einen Seite des umlaufenden Zahnriemens (Füll- und Verschlußseite) weiterhin in einer senkrechten Ausrichtung, während sie sich auf der gegenüberliegenden Seite des Zahnriemens unter einem geringen Winkel relativ zur Horizontalen erstrekken. Dies kann vorteilhaft sein, um die Tubeneinspeisung aus einem leicht geneigten Tubenmagazin zu erleichtern.

Der Antrieb der Transportvorrichtung bzw. des Zahnriemens kann über einen bekannten Servo- oder Schrittmotor oder ein mechanisches Getriebe erfolgen.

In bevorzugter Ausgestaltung der Erfindung ist vorgesehen, daß die Halteelemente außenseitig auf dem Zahnriemen angebracht sind und Haltezungen aufweisen, die unter einem Winkel von γ = α + 90° geneigt von dem Zahnriemen vorstehen. Jede Haltezunge kann dabei zumindest eine Tube aufnehmen, wobei vorzugsweise an jeder Haltezunge zumindest ein Tubenhalter angebracht ist, der bei Bedarf auswechselbar ist und somit in einfacher Weise eine Anpassung der Tubenfüllmaschine an ein anderes Tubenformat ermöglicht.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine perspektivische, ausschnittsweise Darstellung einer Tubenfüllmaschine und
- Figur 2: eine vergrößterte Seitenansicht der Transportvorrichtung.

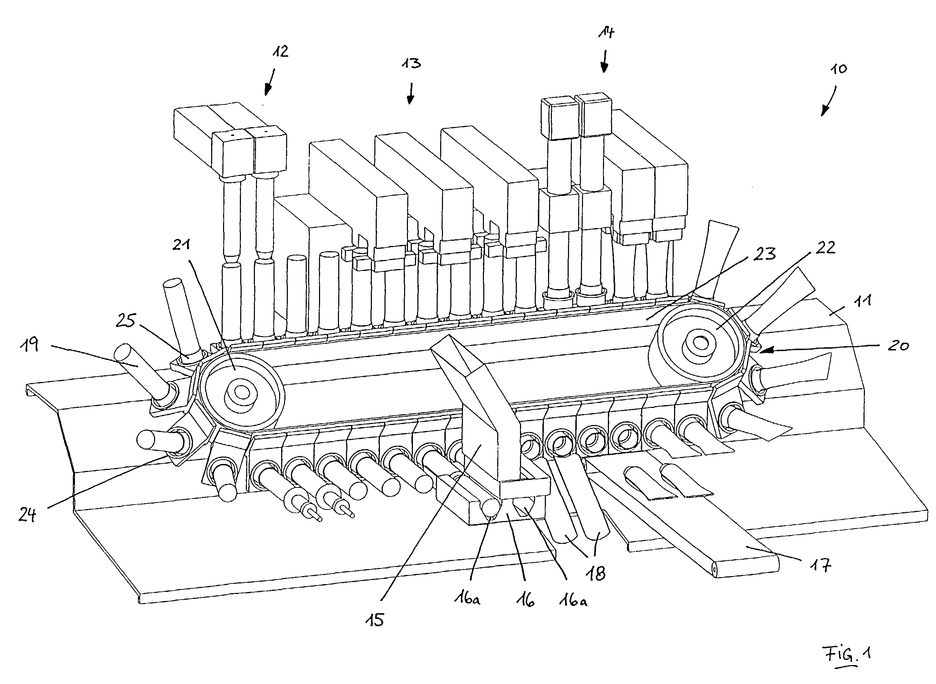

Eine in Figur 1 dargestellte Tubenfüllmaschine 10 weist ein Lagergestell 11 auf, an dem zwei Umlenkrollen 21, 22 in nicht näher dargestellter Weise drehbar gelagert und angetrieben sind. Um die Umlenkrollen 21 und 22 verläuft ein Zahnriemen 23, der auf seine Außenseite eine Vielzahl von Halteelementen 24 trägt, in die jeweils eine Tube 19 einsetzbar ist.

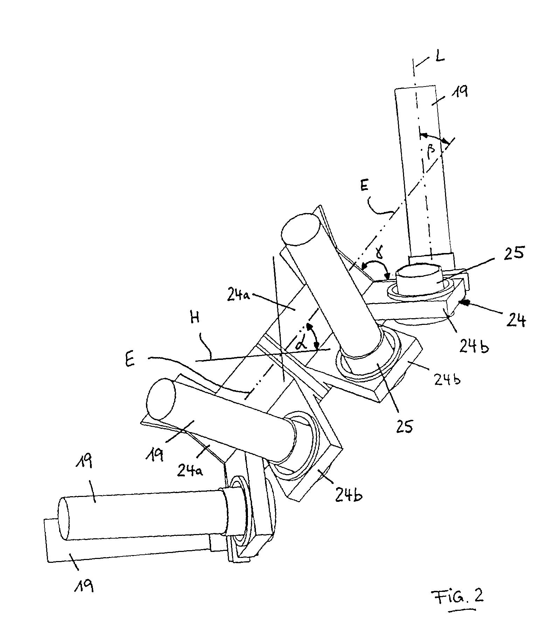

Wie Figur 2 zeigt, spannt der Zahnriemen 23 eine Ebene E auf, die unter einem Winkel α relativ zur Horizontalen H geneigt ist. Jedes Halteelement 24 ist mit einem Befestigungsabschnitt 24a an der Außenseite des Zahnriemens 23 angebracht und umfaßt eine dazu in einem Winkel γ = α + 90° abgewinkelte Haltezunge 24b, die einen Tubenhalter 25 trägt. In jeden Tubenhalter 25 ist eine Tube 19 derart einsetzbar, daß sich ihre Längsachse L unter einem Winkel β geneigt gegenüber der Ebene E des Zahnriemens 23 erstreckt. Dabei sind die Winkel α und β jeweils 45° groß, wodurch erreicht werden kann, daß die Tuben 19 auf der oberen Trumseite des Zahnriemens 23 (rechts in Figur 2) im wesentlichen vertikal ausgerichtet sind, während sie auf der unteren Trumseite (links in Figur 2) eine dazu um den Winkel α - β + 90° = 90° geschwenkte, horizontale Ausrichtung aufweisen.

Im unteren Trumbereich des Zahnriemens 23 ist gemäß Figur 1 ein Eingabeblock 16 mit zwei Tubenaufnahmen 16a vorgesehen, denen jeweils eine leere Tube über einen Zuführschacht 15 in horizontaler Ausrichtung zugeführt werden kann. Die in den Tubenaufnahmen 16a des Eingabeblocks 16 befindlichen Tuben werden in nicht dargestellter Weise in die horizontal ausgerichteten Tubenhalter 25 der vorbeiführenden Halteelemente 24 eingeschoben, in denen sie einen Umlauf durch die Tubenfüllmaschine 10 ausführen. Durch die Umlenkung des Zahnriemens 23 an der Umlenkrolle 21 erfahren die Tuben 19 aufgrund der geneigten Anordnung des Zahnriemens 23 eine Aufrichtung in die Vertikale, die sie auf der oberen Trumseite des Zahnriemens 23 einnehmen. In dieser Ausrichtung durchlaufen sie eine Füllstation 12 und eine Reihe von Verschlußstationen 13 und 14, bevor sie durch Umlenkung des Zahnriemens 23 an der Umlenkrolle 22 wieder auf die untere Trumseite gelangen und dort eine horizontale Ausrichtung einnehmen. Kurz vor Erreichen des Eingabeblocks 16 werden die vorschriftsmäßig gefüllten Tuben mittels eines Austragebandes 17 abgeführt und die gegebenenfalls fehlerhaften Tuben über eine Rutsche 18 einem Sammelbehälter zugeführt.

Wie insbesondere Figur 2 zeigt, kann allein durch die Neigung der Ebene E des Zahnriemens 23 in Zusammenwirkung mit der Neigung der Haltezunge 24b bzw. der Längsachse L der Tube 19 eine Änderung der Ausrichtung der Tube während des Durchlaufs durch die Tubenfüllmaschine erreicht werden.

## Patentansprüche

1. Tubenfüllmaschine mit einer in einer Ebene (E) umlaufenden Transportvorrichtung (20) mit einer Vielzahl von Halteelementen (24), in die jeweils zumindest eine Tube (19) einsetzbar und durch einzelne Arbeitsstationen (12,13,14) zum Füllen und Verschließen der Tube transportierbar ist, **dadurch gekennzeichnet, daß** die Ebene (E) der Transportvorrichtung (20) unter einem Winkel α im Bereich von 20° bis 70° gegenüber der Horizontalen (H) geneigt ist und daß die Tube (19) derart in dem Halteelement (24) gehalten ist, daß ihre Längsachse (L) unter einem Winkel β im Bereich von 20° bis 70° gegenüber der Ebene (E) der Transportvorrichtung (20) geneigt ist, wobei gilt: α + β = 90°.

2. Tubenfüllmaschine nach Anspruch 1, **dadurch gekennzeichnet, daß** der Winkel α ca. 45° beträgt.

3. Tubenfüllmaschine nach Anspruch 1 oder 2, **dadurch gekennzeichnet, daß** der Winkel α gleich dem Winkel β ist.

4. Tubenfüllmaschine nach Anspruch 1 oder 2, **dadurch gekennzeichnet, daß** die Winkel α und β leicht unterschiedlich sind.

5. Tubenfüllmaschine nach einem der Ansprüche 1 bis 4, **dadurch gekennzeichnet, daß** die Transportvorrichtung (20) ein umlaufender Riemen (23) oder eine Kette ist.

6. Tubenfüllmaschine nach Anspruch 5, **dadurch gekennzeichnet, daß** die Halteelemente (24) außenseitig auf dem Riemen (23) oder der Kette angebracht sind und eine Haltezunge (24b) aufweisen, die unter einem Winkel γ = α + 90° geneigt von dem Riemen vorsteht.

7. Tubenfüllmaschine nach Anspruch 6, **dadurch gekennzeichnet, daß** an der Haltezunge (24b) zumindest ein Tubenhalter (25) auswechselbar befestigt ist.

8. Tubenfüllmaschine nach Anspruch 7, **dadurch gekennzeichnet, daß** an der Haltezunge (24b) mehrere Tubenhalter (25) befestigt sind.

## Claims

1. Tube filling machine with a conveying device (20), revolving in a plane (E) and having a plurality of holding elements (24) into which can be in each case inserted at least one tube (19) and conveyed through individual work stations (12, 13, 14) for filling and sealing the tube, **characterized in that** the plane (E) of the conveying device (20) is inclined under an angle α in the range 20 to 70° relative to the horizontal (H) and that the tube (19) is held in such a way in the holding element (24) that its longitudinal axis (L) is inclined under an angle β in the range 20 to 70° relative to the plane (E) of the conveying device (20), in which α + β = 90°.

2. Tube filling machine according to claim 1, **characterized in that** the angle α is approximately 45°.

3. Tube filling machine according to claim 1 or 2, **characterized in that** the angle α is equal to the angle β.

4. Tube filling machine according to claim 1 or 2, **characterized in that** the angles α and β differ slightly.

5. Tube filling machine according to one of the claims 1 to 4, **characterized in that** the conveying device (20) is a revolving belt (23) or a chain.

6. Tube filling machine according to claim 5, **characterized in that** the holding elements (24) are externally fitted to the belt (23) or chain and have a holding tongue (24b), which projects from the belt under an angular inclination γ = α + 90°.

7. Tube filling machine according to claim 6, **characterized in that** at least one tube holder (25) is interchangeably fixed to the holding tongue (24b).

8. Tube filling machine according to claim 7, **characterized in that** several tube holders (25) are fixed to the holding tongue (24b).

## Revendications

1. Machine de remplissage de tubes comportant un dispositif de convoyage (20) circulant dans un plan (E), dispositif présentant une pluralité d'éléments de maintien (24), dans chacun desquels on peut introduire au moins un tube (19) et le transporter à travers différents postes individuels d'opération (12,13,14) en vue de son remplissage et de sa fermeture, **caractérisée en ce que** le plan (E) du dispositif de convoyage (20) est incliné selon un angle α d'une valeur comprise entre 20° et 70° par rapport à l'horizontale (H) et **en ce que** le tube (19) est maintenu dans l'élément de maintien (24) de telle façon que son axe longitudinal (L) soit incliné par rapport au plan (E) du dispositif de convoyage (20) d'un angle β d'une valeur comprise entre 20° et 70°, α + β étant égal à 90°.

2. Machine de remplissage de tubes selon la revendication 1, **caractérisée en ce que** l'angle α correspond à environ 45°.

3. Machine de remplissage de tubes selon la revendication 1 ou 2, **caractérisée en ce que** l'angle α est égal à l'angle β.

4. Machine de remplissage de tubes selon la revendication 1 ou 2, **caractérisée en ce que** les angles α et β sont légèrement différents.

5. Machine de remplissage de tubes selon l'une quelconque des revendications 1 à 4, **caractérisée en ce que** le dispositif de convoyage (20) est formé par une courroie (23) ou une chaîne sans fin.

6. Machine de remplissage de tubes selon la revendication 5, **caractérisée en ce que** les éléments de maintien (24) sont montés à l'extérieur sur la courroie (23) ou la chaîne, et présentent une languette de maintien (24b) faisant saillie à partir de la courroie selon un angle d'inclinaison de γ = α + 90°.

7. Machine de remplissage de tubes selon la revendication 6, **caractérisée en ce qu'**au moins un support de tube (25) est fixé interchangeable sur la languette de maintien (24b).

8. Machine de remplissage de tubes selon la revendication 7, **caractérisée en ce que** plusieurs supports de tubes (25) sont fixés sur la languette de maintien (24b).
